# EUROPEAN PATENT APPLICATION

(11) **EP 2 696 215 A2**
(43) Date of publication of application: **12.02.2014**
(21) Application number: 13178148.6
(22) Date of filing: 26.07.2013
(51) Int. Cl.: G01S 15/93

(54) **Parking assist system**

(30) Priority: 08.08.2012 JP 2012176336
(71) Applicant: AISIN SEIKI KABUSHIKI KAISHA, Kariya-shi, Aichi 448-8650 (JP)
(72) Inventor: Tachibana, Hiroyuki, Kariya-shi, Aichi 448-8650 (JP); Yamashita, Tomohisa, Nagoya-shi, Aichi 450-0002 (JP)
(74) Representative: TBK

(57) **Abstract**

A parking assist system (100) includes an obstacle detection sensor (10) including a sensor body (11, 12) arranged on a vehicle (1) and emitting an ultrasonic wave, the obstacle detection sensor (10) having an undetectable region (13) where the obstacle detection sensor (10) is unable to measure a distance to an obstacle, the undetectable region (13) extending from the sensor body (11, 12) by a predetermined distance (L), an alarm portion (22) prompting a driver to change a traveling direction of the vehicle (1) when the obstacle enters a predetermined region by traveling of the vehicle (1), a distance calculation portion (23) calculating a remaining distance (L2) from the vehicle (1) to the obstacle by calculating a travel distance (L1) of the vehicle (1) from vehicle travel information (14) and subtracting the travel distance (L1) from the predetermined distance (L) when the obstacle enters the undetectable region (13), and a vehicle travel restraining portion (25) restraining the traveling of the vehicle (1) approaching the obstacle when the remaining distance (L2) reaches a predetermined travel restraint initiation distance (LS).

## Description

### TECHNICAL FIELD

This disclosure generally relates to a parking assist system.

### BACKGROUND DISCUSSION

An obstacle detection apparatus provided with an ultrasonic sonar or a similar device arranged on a vehicle at front and rear bumpers or similar positions is known. In the known obstacle detection apparatus, the ultrasonic sonar or a similar device measures a distance from the vehicle to the obstacle. In a case where a measured distance is shorter than a predetermined distance, the known obstacle detection apparatus sets off an alarm. Such technology is disclosed in JP2007-333609A, hereinafter referred to as Reference 1.

An obstacle detection apparatus disclosed in Reference 1 measures a distance from a vehicle equipped with an obstacle detection apparatus to an obstacle by transmitting a signal having a predetermined directivity from an ultrasonic sonar mounted on the vehicle to the obstacle. Based on an elapsed time from a point in time the signal is transmitted to a point in time the signal is received after the signal is reflected at the obstacle, the obstacle detection apparatus measures a distance from the vehicle to the obstacle. Note that an example of the obstacle is a parked vehicle. In a case where a measured distance is within a region relatively close to the vehicle equipped with the obstacle detection apparatus, the obstacle detection apparatus generates a discontinuous sound. Furthermore, in a state where the distance from the vehicle to the obstacle becomes even shorter, the obstacle detection apparatus generates a continuous sound to warn the driver that the obstacle is very near. By such warnings, the obstacle detection apparatus assists back-in parking and parallel parking operations of a driver by prompting the driver to change a traveling direction of the vehicle.

In a state where a distance to an obstacle becomes shorter than a detectable shortest distance of an obstacle detection sensor, the obstacle detection sensor is unable to measure an actual distance to the obstacle. A region where the obstacle detection sensor is unable to measure the actual distance to the obstacle is referred to as an undetectable region. With a technology disclosed in Reference 1, in a case where the driver is warned by the continuous sound, the distance between the vehicle equipped with the obstacle detection apparatus and the obstacle is extremely short. In other words, the obstacle is at a position within the undetectable region of the obstacle detection sensor. Nevertheless, even in a state where the obstacle is at the position within the undetectable region, the driver may attempt the vehicle to approach the obstacle by his/her own judgment. In such case, the obstacle detection sensor is unable to provide the driver with an accurately measured distance from the vehicle to the obstacle. Accordingly, the driver is forced to guess the distance from the vehicle to the obstacle. As a result, a collision between the vehicle and the obstacle may increase.

A need thus exists for a parking assist system that allows measurement of a distance from the vehicle to the obstacle within an undetectable region of an obstacle detection sensor.

### SUMMARY

According to an aspect of this disclosure, a parking assist system includes an obstacle detection sensor including a sensor body arranged on a vehicle and emitting an ultrasonic wave, the obstacle detection sensor having an undetectable region where the obstacle detection sensor is unable to measure an actual distance to an obstacle, the undetectable region extending from the sensor body by a predetermined distance. The parking assist system further includes an alarm portion prompting a driver to change a traveling direction of the vehicle when the obstacle enters a predetermined region defined for the obstacle detection sensor by traveling of the vehicle, a distance calculation portion calculating a remaining distance from the vehicle to the obstacle by calculating a travel distance of the vehicle based on vehicle travel information and subtracting the travel distance from the predetermined distance when the obstacle enters the undetectable region, and a vehicle travel restraining portion restraining the traveling of the vehicle approaching the obstacle when the remaining distance reaches a travel restraint initiation distance that is predetermined.

Upon the arrangement described herewith, the alarm portion prompts the driver when the obstacle enters the predetermined region defined for the obstacle detection sensor by the traveling of the vehicle. Accordingly, the driver may operate the vehicle to park while reliably avoiding the obstacle. Furthermore, in a case where the vehicle travels in a direction that makes the vehicle approach the obstacle after the obstacle has entered the undetectable region, the distance calculation portion calculates the remaining distance from the vehicle to the obstacle. When the remaining distance from the vehicle to the obstacle reaches the travel restraint initiation distance that is predetermined, the vehicle travel restraining portion restrains the traveling of the vehicle. Accordingly, a parking operation of the vehicle in a state where the obstacle is at a position within the undetectable region is allowed while the parking operation is made easier for the driver. Furthermore, the vehicle is restrained from traveling in a state where the vehicle comes close to colliding with the obstacle so that the driver is provided with safety during the parking operation.

According to another aspect of this disclosure, the predetermined region defined for the obstacle detection sensor of the parking assist system is the undetectable region.

The undetectable region is a region where the obstacle detection sensor is unable to measure an actual distance between the vehicle and the obstacle. Accordingly, when the driver is prompted to change the traveling direction of the vehicle after the vehicle has entered the undetectable region, the driver is forced to change the traveling direction of the vehicle while the driver is unable to grasp the actual distance between the vehicle and the obstacle. As a result, a possibility that the vehicle and the obstacle collide may increase. Nevertheless, in a state where the predetermined region is the undetectable region as in the parking assist system according to this disclosure, the driver may be prompted to change the traveling direction of the vehicle at the time at which the vehicle enters the undetectable region. Accordingly, a distance corresponding to the undetectable region of the obstacle detection sensor may be secured between the vehicle and the obstacle in a state where the driver operates the vehicle to change the traveling direction. As a result, the driver may operate the vehicle to park while a collision between the vehicle and the obstacle is more reliably avoided. In a state where the predetermined region is different from the undetectable region, a portion to determine that the vehicle has entered the predetermined region is separately provided in addition to a portion to determine that the vehicle has entered the undetectable region. Nevertheless, in a state where the predetermined region defined for the obstacle detection sensor is the undetectable region as in the parking assist system of this disclosure, providing a portion to determine the undetectable region simultaneously serves as a portion to determine the predetermined region. Accordingly, the parking assist system having a simple configuration may be provided.

According to further aspect of this disclosure, the vehicle travel restraining portion of the parking assist system is configured with a brake mechanism braking a wheel of the vehicle.

The travel restraint initiation distance where restraining of the traveling of the vehicle begins is a distance between the vehicle and the obstacle after the obstacle has entered the undetectable region of the obstacle detection sensor. Accordingly, the vehicle travel restraining portion is configured to promptly stop the vehicle to avoid collision between the vehicle and the obstacle. By the vehicle travel restraining portion configured with the brake mechanism for the wheel of the vehicle, traveling of the vehicle is reliably restrained. The brake mechanism is originally equipped on the vehicle. Accordingly, the parking assist system may be configured without increasing cost.

According to another aspect of this disclosure, the travel restraint initiation distance of the parking assist system is configured to alter in accordance with a travel speed of the vehicle.

In a certain case where the vehicle travels closer to the obstacle even after the obstacle has entered the undetectable region, the driver may be intentionally operating the vehicle to travel closer to the obstacle even after the obstacle has entered the undetectable region. In such case, a purpose of restraining traveling of the vehicle is to prevent the vehicle from colliding with the obstacle. Favorably, traveling of the vehicle is restrained at a position just before the vehicle makes collision with the obstacle. Accordingly, the travel restraint initiation distance of the parking assist system according to this disclosure is configured to alter in accordance with the travel speed of the vehicle. More specifically, in a case where the travel speed of the vehicle is high, a longer distance is defined as the travel restraint initiation distance. Similarly, in a case where the travel speed of the vehicle is low, a shorter distance is defined as the travel restraint initiation distance. Accordingly, a collision between the vehicle and the obstacle may be prevented. Furthermore, a range where the vehicle may travel during the parking operation is increased so that the parking operation may be provided with more ease.

According to further aspect of this disclosure, the obstacle detection sensor of the parking assist system is arranged at front and rear portions of the vehicle to emit the ultrasonic wave in front and rear directions of the vehicle.

Accordingly, the undetectable regions are defined at each of a frontward direction and a rearward direction of the vehicle, so that in addition to an obstacle in the rearward direction of the vehicle, an obstacle that is within an undetectable region and in an unseeable region within a field of view of the driver in the frontward direction of the vehicle is detected by the obstacle detection sensor. Accordingly, the driver may be more reliably guided on when to change the traveling direction of the vehicle.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a simplified top view drawing illustrating a detection area of an obstacle detection sensor of a parking assist system according to an embodiment;

Fig. 2 is a block diagram illustrating a configuration of the parking assist system according to the embodiment;

Fig. 3 is a drawing illustrating an operation of the parking assist system according to the embodiment to detect an obstacle;

Fig. 4 is a drawing illustrating an operation of a vehicle equipped with the parking assist system according to the embodiment at a time of attempting parallel parking;

Fig. 5 is a drawing illustrating the operation of the vehicle equipped with the parking assist system according to the embodiment at the time of attempting parallel parking;

Fig. 6 is a drawing illustrating the operation of the vehicle equipped with the parking assist system according to the embodiment at the time of attempting parallel parking;

Fig. 7 is a drawing illustrating the operation of the vehicle equipped with the parking assist system according to the embodiment at the time of attempting parallel parking;

Fig. 8 is a drawing illustrating the operation of the vehicle equipped with the parking assist system according to the embodiment at the time of attempting parallel parking;

Fig. 9 is a drawing illustrating an operation of the vehicle equipped with the parking assist system according to the embodiment at a time of attempting back-in parking; and

Fig. 10 is a drawing illustrating the operation of the vehicle equipped with the parking assist system according to the embodiment at the time of attempting back-in parking.

### DETAILED DESCRIPTION

A parking assist system 100 according to an embodiment is described in detail referring to drawings.

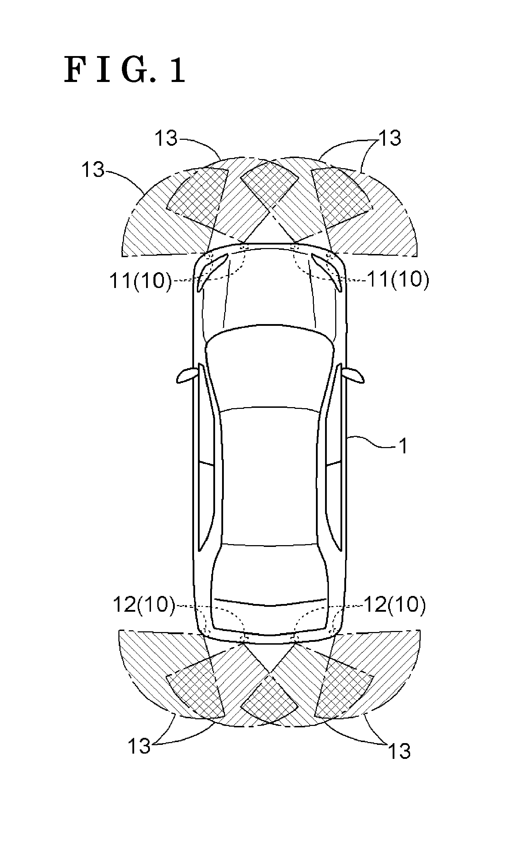

Fig. 1 illustrates a vehicle 1 equipped with an obstacle detection sensor 10 for use in the parking assist system 100. The obstacle detection sensor 10 is arranged at front and rear portions of the vehicle 1. The obstacle detection sensor 10 emits and receives ultrasonic waves for determining a distance between the vehicle 1 and an obstacle. As Fig. 1 illustrates, sensor bodies 11, 12 emitting ultrasonic waves are arranged at front and rear portions of the vehicle 1. In the embodiment, four sensor bodies 11 are fixed on a front bumper of the vehicle 1 and four sensor bodies 12 are fixed on a rear bumper of the vehicle 1. The sensor bodies 11, 12 transmit oscillatory waves toward front and rear directions of the vehicle 1. The oscillatory wave is a signal having a predetermined cycle and amplitude that propagates in air. The obstacle detection sensor 10 includes an undetectable region 13, which is a region where the obstacle detection sensor 10 is unable to measure an actual distance to the obstacle. The obstacle detection sensor 10 is unable to measure the actual distance to the obstacle in a state in which a distance to the obstacle becomes shorter than a sensor detection distance L, which serves as a predetermined distance. The sensor detection distance L is the minimum distance the obstacle detection sensor 10 may detect. Accordingly, in the undetectable region 13, the obstacle detection sensor 10 continues to output the sensor detection distance L as a distance, for example, from the sensor body 11 or the sensor body 12 to the obstacle.

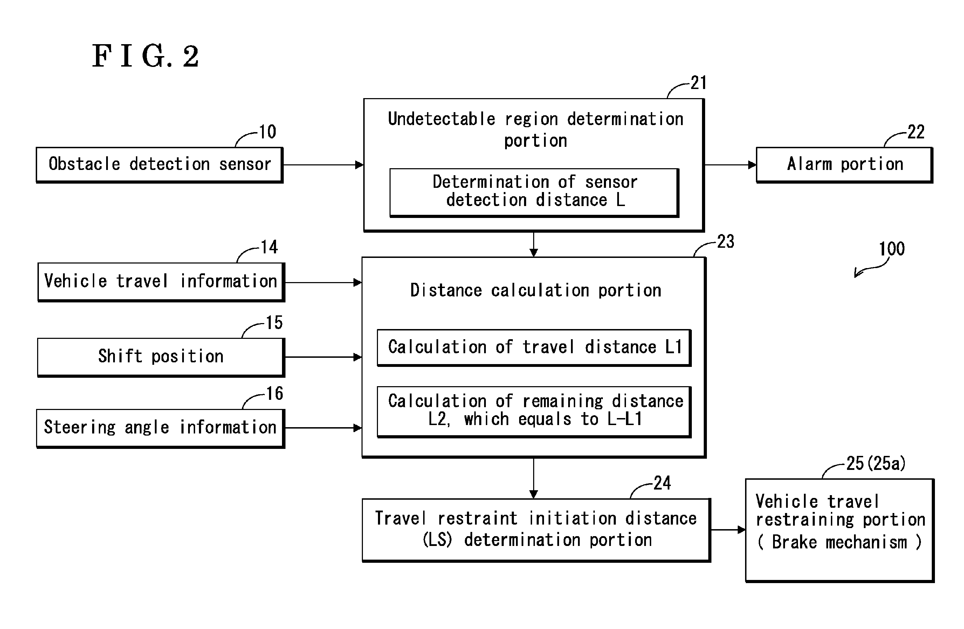

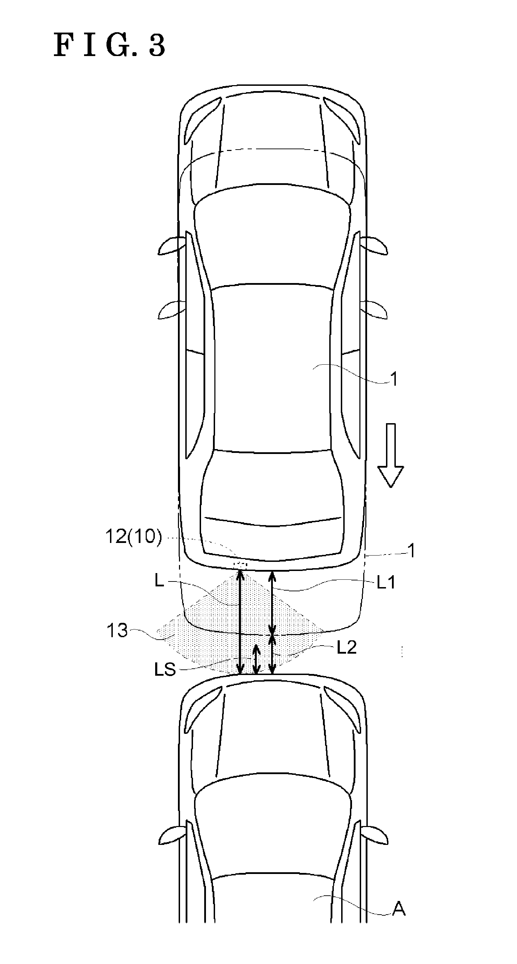

Fig. 2 is a block diagram illustrating a general configuration of the parking assist system 100. Fig. 3 illustrates a relationship between the sensor detection distance L, a travel distance L1, and a remaining distance L2. The sensor detection distance L is the minimum distance, or a shortest distance to the obstacle, the obstacle detection sensor 10 may detect. The travel distance L1 is the distance the vehicle 1 travels within the undetectable region 13 of the obstacle detection sensor 10. The remaining distance L2 is the distance the vehicle 1 may travel before colliding with a vehicle A, which is an obstacle at a position in a rearward direction of the vehicle 1. Note that, Fig. 3 illustrates an example in which the vehicle 1 travels backward and straight toward the vehicle A, which is the obstacle at a position in the rearward direction of the vehicle 1, to simplify a description of the relationship between the sensor detection distance L, the travel distance L1, and the remaining distance L2.

An undetectable region determination portion 21 determines that the distance from the vehicle 1 to the obstacle obtained by the obstacle detection sensor 10 has become equal to or less than the sensor determination distance L, which is shown in Fig. 3. The alarm portion 22 prompts, or alarms or warns, a driver to change a traveling direction of the vehicle 1 when the obstacle enters a predetermined region defined for the obstacle detection sensor 10 by traveling of the vehicle 1. Note that the predetermined region refers to each region extending from a sensor body 11 or a sensor body 12 by a predetermined distance. In the parking assist system 100 according to the embodiment, the alarm portion 22 prompts the driver to change the traveling direction of the vehicle 1 when the alarm portion 22 receives a determination signal from the undetectable region determination portion 21. In other words, in the parking assist system 100 according to the embodiment, the predetermined region is defined as the undetectable region 13. The driver is prompted, for example, with a continuous sound or a discontinuous sound. Note that, the parking assist system 100 according to the embodiment is not configured to restrain traveling of the vehicle 1 by a brake mechanism 25a or a similar mechanism equipped on the vehicle 1 in response to prompting the driver to change the traveling direction of the vehicle 1. In other words, the parking assist system 100 according to the embodiment is not configured to restrain traveling of the vehicle 1 at a time at which the predetermined distance from the vehicle 1 to the obstacle becomes equal to or less than the sensor detection distance L. The parking assist system 100 according to the embodiment is not configured to restrain traveling of the vehicle 1 in response to prompting the driver to change the traveling direction of the vehicle 1 in order to prevent the driver from overly rely on the parking assist system 100 and from neglecting assessment of a situation by the driver himself/herself.

The distance calculation portion 23 calculates the remaining distance L2 between the vehicle 1 and the vehicle A that is at a position in the rearward direction of the vehicle 1 based on vehicle travel information 14 and other information when the distance calculation portion 23 receives the determination signal from the undetectable region determination portion 21 and on condition that a shift position 15 is retained at a reverse position. Note that, the remaining distance L2 refers to the distance as shown in Fig. 3. More specifically, the remaining distance L2 from the vehicle 1 to the vehicle A that is at a position in the rearward direction of the vehicle 1 is calculated by calculating the travel distance L1 of the vehicle 1 from the vehicle travel information 14 added with steering angle information 16, then subtracting the travel distance L1 from the sensor detection distance L. Note that, an example of the vehicle travel information 14 is a wheel speed.

A travel restraint initiation distance determination portion 24 determines that the remaining distance L2 calculated by the distance calculation portion 23 has become equal to or less than the travel restraint initiation distance LS. A vehicle travel restraining portion 25 restrains the vehicle 1 from traveling in a direction toward the vehicle A that is at a position in the rearward direction of the vehicle 1 when the vehicle travel restraining portion 25 receives a determination signal from the travel restraint initiation distance determination portion 24 that the remaining distance L2 has reached the travel restraint initiation distance LS. As an example, the vehicle travel restraining portion 25 is configured with a brake mechanism 25a for a wheel of the vehicle 1.

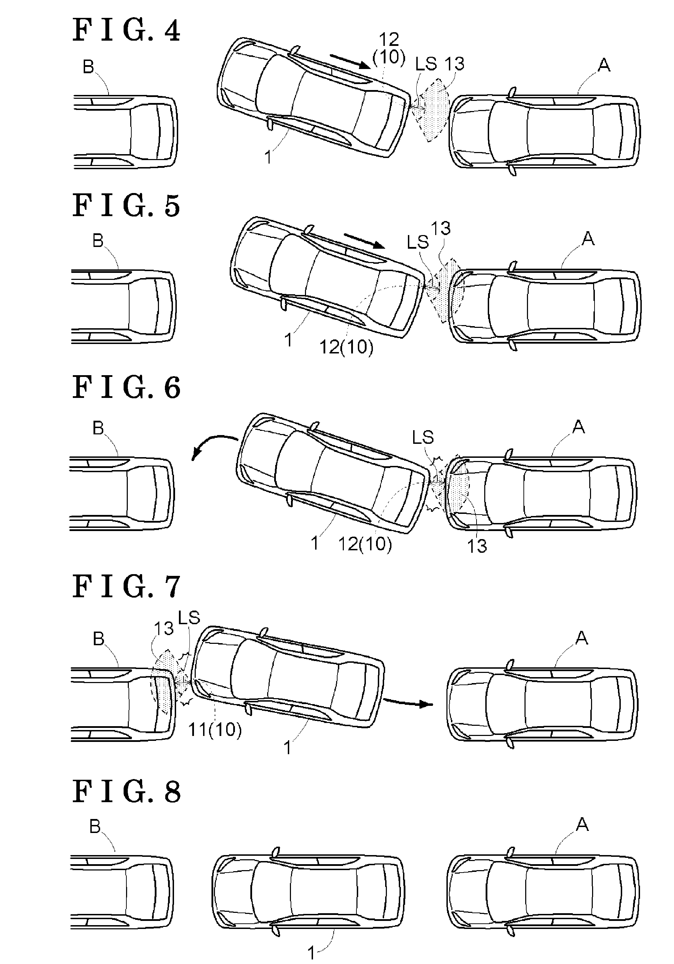

An assist operation by the parking assist system 100 according to the embodiment at a time of parallel parking will be described next referring to Figs. 4 to 8. Note that, in Figs. 4 to 8, in order to simplify descriptions, one sensor body 11 is illustrated as an example of the sensor bodies 11 arranged at the front portion of the vehicle 1 and one sensor body 12 is illustrated as an example of the sensor bodies 12 arranged at a rear portion of the vehicle 1.

Fig. 4 illustrates a state in which a distance between the vehicle 1 and the vehicle A that is at a position in the rearward direction of the vehicle 1 has reached the sensor detection distance L of the obstacle detection sensor 10 by the vehicle 1 traveling backward to parallel park between the vehicle A and a vehicle B. In this state, the undetectable region determination portion 21 determines that the vehicle A that is at the position in the rearward direction of the vehicle 1 has entered the undetectable region 13. A determination signal from the undetectable region determination portion 21 is transmitted to the alarm portion 22 so that the alarm portion 22 prompts a driver to change the traveling direction of the vehicle 1. In a state where a brake is operated at this time and the shift position 15 is shifted to a drive position, a steering handle is automatically turned in a direction to change the traveling direction of the vehicle 1 and the vehicle 1 travels forward.

When the vehicle A that is at the position in the rearward direction of the vehicle 1 enters the undetectable region 13 by the vehicle 1 traveling backward, the determination signal from the undetectable region determination portion 21 is simultaneously transmitted to the distance calculation portion 23. While the shift position 15 is retained at the reverse position, the distance calculation portion 23 calculates the travel distance L1 of the vehicle 1 from the vehicle travel information 14 added with the steering angle information 16. Furthermore, based on the travel distance L1, the distance calculation portion 23 calculates the remaining distance L2 between the vehicle 1 and the vehicle A that is at the position in the rearward direction of the vehicle 1.

Fig. 5 illustrates a state where the vehicle 1 has further approached the vehicle A that is at the position in the rearward direction of the vehicle 1 by the vehicle 1 continued traveling backward even after the driver is prompted to change the traveling direction of the vehicle 1. In this state, which is illustrated in Fig. 5, the distance calculation portion 23 continues to calculate the travel distance L1 of the vehicle 1 and the remaining distance L2 between the vehicle 1 and the vehicle A that is at the position in the rearward direction of the vehicle 1.

Fig. 6 illustrates a state in which the distance between the vehicle 1 and the vehicle A that is at the position in the rearward direction of the vehicle 1 has reached the travel restraint initiation distance LS by the vehicle 1 further traveling backward. In this state, which is illustrated in Fig. 6, the distance calculation portion 23 continues to calculate the travel distance L1 of the vehicle 1 and the remaining distance L2 between the vehicle 1 and the vehicle A that is at the position in the rearward direction of the vehicle 1. Furthermore, the travel restraint initiation distance determination portion 24 determines that the remaining distance L2 between the vehicle 1 and the vehicle A has reached the travel restraint initiation distance LS. By receiving a determination signal from the travel restraint initiation distance determination portion 24, the vehicle travel restraining portion 25 restrains the vehicle 1 from further traveling in the rearward direction. More specifically, the vehicle travel restraining portion 25 operates the brake to stop the vehicle 1. In a state where the driver shifts the shift position 15 to the drive position after the vehicle travel restraining portion 25 operates the brake to stop the vehicle 1, the steering handle of the vehicle 1 is automatically turned in a direction to change the traveling direction of the vehicle 1 and the vehicle 1 starts traveling forward.

Fig. 7 illustrates a state where the driver has operated the vehicle 1 to change the traveling direction of the vehicle 1, the operation that includes traveling of the vehicle 1 in a frontward direction. Accordingly, the vehicle B, which is the obstacle at a position in the frontward direction of the vehicle 1, enters the undetectable region 13. Furthermore, Fig. 7 illustrates the state where a distance between the vehicle 1 and the vehicle B that is at the position in the frontward direction of the vehicle 1 has reached the travel restraint initiation distance LS. In this state, which is illustrated in Fig. 7, the distance calculation portion 23 continues calculating the travel distance L1 of the vehicle 1 and the remaining distance L2 between the vehicle 1 and the vehicle B. Furthermore, the travel restraint initiation distance determination portion 24 recognizes that the remaining distance L2 between the vehicle 1 and the vehicle B has reached the travel restraint initiation distance LS. By receiving a determination signal from the travel restraint initiation distance determination portion 24, the vehicle travel restraining portion 25 restrains the vehicle 1 from further traveling in the frontward direction. Fig. 8 illustrates a state in which the parallel parking operation has completed after the vehicle 1 has restrained from traveling in the frontward direction and the driver has operated the vehicle 1 to complete the parking operation assisted by the parking assist system 100.

Accordingly, when the obstacle, which is either the vehicle A or the vehicle B, enters the undetectable region 13 of the obstacle detection sensor 10 by traveling of the vehicle 1, the alarm portion 22 prompts the driver to change the traveling direction of the vehicle 1 so that the driver may operate the vehicle 1 to park while reliably avoiding collision with the obstacle. Furthermore, in a case where the vehicle 1 travels further in a direction in which the vehicle 1 approaches the vehicle A or the vehicle B after the vehicle A or the vehicle B has entered the undetectable region 13, the distance calculation portion 23 calculates the remaining distance L2 from the vehicle 1 to the obstacle. When the remaining distance L2 from the vehicle 1 to the obstacle becomes the travel restraint initiation distance LS that is predetermined, the vehicle travel restraining portion 25 restrains the traveling of the vehicle 1 in the direction in which the vehicle 1 approaches the obstacle. Accordingly, in the parking assist system 100 according to the embodiment, a parking operation of the vehicle 1 in a state where the vehicle A or the vehicle B is at a position within the undetectable region 13 is allowed while the parking operation is made easier for the driver. Furthermore, the vehicle 1 is automatically restrained from traveling when the vehicle 1 comes close to colliding with either the vehicle A or the vehicle B so that the driver is provided with safety during the parking operation. In addition, by the vehicle travel restraining portion 25 configured with the brake mechanism 25a for the wheel of the vehicle 1, traveling of the vehicle 1 is reliably restrained. The brake mechanism 25a is originally equipped on the vehicle 1. Accordingly, the parking assist system 100 may be configured without increasing cost.

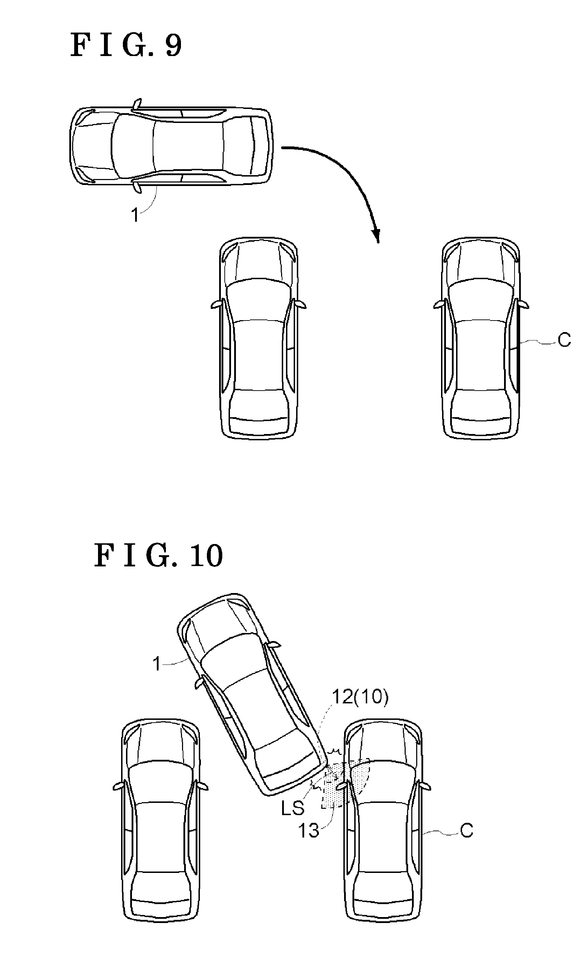

The parking assist system 100 may be used to assist a driver, for example, in a back-in parking situation in a parking lot or in a back-in parking situation into a garage space. As an example of a back-in parking situation, the vehicle 1 may travel backward from a position of the vehicle 1 illustrated in Fig. 9. Accordingly, the vehicle 1 approaches a vehicle C, which is the vehicle at a position farther away from the vehicle 1 relative to the initial position of the vehicle 1 attempting back-in parking. In a certain case, the vehicle C may enter the undetectable region 13 of the obstacle detection sensor 10. Similarly to the situation for parallel parking, the alarm portion 22 prompts the driver of the vehicle 1 to change a traveling direction of the vehicle 1. Furthermore, when the remaining distance L2 between the vehicle 1 and the vehicle C reaches the travel restraint initiation distance LS, the vehicle travel restraining portion 25 restrains traveling of the vehicle 1. Note that, in a situation of back-in parking into a garage space, the obstacle for the vehicle 1 may be a wall or a similar portion of the garage instead of other vehicles.

The parking assist system 100 according to other embodiments will be described next. In the parking assist system 100 according to the embodiment, the predetermined region of the obstacle detection sensor 10 is defined as the undetectable region 13, however, the predetermined region of the obstacle detection sensor 10 may be a different region defined by a predetermined distance that is different from the sensor detection distance L of the undetectable region 13. More specifically, the predetermined distance may be longer than the sensor detection distance L or may be shorter than the sensor detection distance L on the contrary. In a case where the predetermined distance is different from the sensor detection distance L, the parking assist system 100 is provided with a determination portion to determine that the vehicle 1 has entered the predetermined region separately from the undetectable region determination portion 21. In other words, the parking assist system 100 is separately provided with the determination portion to determine that the distance from the vehicle 1 to the obstacle has reached a distance equal to or less than the predetermined distance.

In the parking assist system 100 according to the embodiment, the travel restraint initiation distance LS is a predetermined fixed value, however, the travel restraint initiation distance LS may be configured such that the travel restraint initiation distance LS is altered in accordance with a travel speed of the vehicle 1. For example, in a case where the travel speed of the vehicle 1 is high, a longer distance may be defined as the travel restraint initiation distance LS. Similarly, in a case where the travel speed of the vehicle 1 is low, a shorter distance may be defined as the travel restraint initiation distance LS. Even in a case where the travel restraint initiation distance LS is accordingly defined, a collision between the vehicle 1 and the obstacle may be avoided. In this altered embodiment of the parking assist system 100, the vehicle 1 is allowed to approach parked vehicles or other obstacles up to a position just before the vehicle 1 makes collision with the parked vehicles or other obstacles while preventing the vehicle 1 to collide with the parked vehicles or other obstacles that has entered the undetectable region 13. Accordingly, a limited parking space may be utilized to fullest. Furthermore, the parking operation may be provided with more ease, for example, by decreasing number of operations to change a traveling direction of the vehicle 1.

In the parking assist system 100 according to the embodiment, a wheel speed is included as an example of the vehicle travel information 14, however, in a case where the vehicle 1 runs by rotation of a motor, a rotation angle of the motor may be included in the vehicle travel information 14. Furthermore, the vehicle travel information 14 may include positional information of the vehicle 1 received from GPS or a similar system. In a case where the positional information of the vehicle 1 is used as the vehicle travel information 14, the travel distance L1 of the vehicle 1 may be calculated without adding the steering angle information 16.

In the parking assist system 100 according to the embodiment, the vehicle travel restraining portion 25 is configured with the brake mechanism 25a braking the wheel of the vehicle 1, however, in a case where the vehicle 1 runs, for example, by a motor, the vehicle travel restraining portion 25 may be configured such that the vehicle travel restraining portion 25 terminates a drive power for the vehicle 1 to travel.

An industrial applicability will be described next. The parking assist system 100 according to this disclosure is widely applicable to an automatic parking assist system for variety of vehicles.
A parking assist system (100) includes an obstacle detection sensor (10) including a sensor body (11, 12) arranged on a vehicle (1) and emitting an ultrasonic wave, the obstacle detection sensor (10) having an undetectable region (13) where the obstacle detection sensor (10) is unable to measure a distance to an obstacle, the undetectable region (13) extending from the sensor body (11, 12) by a predetermined distance (L), an alarm portion (22) prompting a driver to change a traveling direction of the vehicle (1) when the obstacle enters a predetermined region by traveling of the vehicle (1), a distance calculation portion (23) calculating a remaining distance (L2) from the vehicle (1) to the obstacle by calculating a travel distance (L1) of the vehicle (1) from vehicle travel information (14) and subtracting the travel distance (L1) from the predetermined distance (L) when the obstacle enters the undetectable region (13), and a vehicle travel restraining portion (25) restraining the traveling of the vehicle (1) approaching the obstacle when the remaining distance (L2) reaches a predetermined travel restraint initiation distance (LS).

## Claims

1. A parking assist system (100), comprising:
an obstacle detection sensor (10) including a sensor body (11, 12) arranged on a vehicle (1) and emitting an ultrasonic wave, the obstacle detection sensor (10) having an undetectable region (13) where the obstacle detection sensor (10) is unable to measure an actual distance to an obstacle, the undetectable region (13) extending from the sensor body (11, 12) by a predetermined distance (L);
an alarm portion (22) prompting a driver to change a traveling direction of the vehicle (1) when the obstacle enters a predetermined region defined for the obstacle detection sensor (10) by traveling of the vehicle (1);
a distance calculation portion (23) calculating a remaining distance (L2) from the vehicle (1) to the obstacle by calculating a travel distance (L1) of the vehicle (1) based on vehicle travel information (14) and subtracting the travel distance (L1) from the predetermined distance (L) when the obstacle enters the undetectable region (13); and
a vehicle travel restraining portion (25) restraining the traveling of the vehicle (1) approaching the obstacle when the remaining distance (L2) reaches a travel restraint initiation distance (LS) that is predetermined.

2. The parking assist system (100) according to Claim 1, wherein the predetermined region defined for the obstacle detection sensor (10) is the undetectable region (13).

3. The parking assist system (100) according to Claim 1 or 2, wherein the vehicle travel restraining portion (25) is configured with a brake mechanism (25a) braking a wheel of the vehicle (1).

4. The parking assist system (100) according to any one of Claims 1 to 3, wherein the travel restraint initiation distance (LS) is configured to alter in accordance with a travel speed of the vehicle (1).

5. The parking assist system (100) according to any one of Claims 1 to 4, wherein the obstacle detection sensor (10) is arranged at front and rear portions of the vehicle (1) to emit the ultrasonic wave in front and rear directions of the vehicle (1).
